(19) **Europäisches Patentamt / European Patent Office / Office européen des brevets**

(11) **EP 4 250 581 A1**

(12) **EUROPEAN PATENT APPLICATION**

(43) Date of publication:
**27.09.2023 Bulletin 2023/39**

(21) Application number: **22164182.2**

(22) Date of filing: **24.03.2022**

(51) International Patent Classification (IPC):
*H04B 7/0413* (2017.01)    *H04B 7/0452* (2017.01)
*H04L 5/00* (2006.01)    *H04W 72/04* (2023.01)
*H04W 64/00* (2009.01)    *H04B 7/0456* (2017.01)

(52) Cooperative Patent Classification (CPC):
**H04B 7/0413; H04B 7/0452; H04B 7/0486;
H04L 5/0023; H04L 5/0025; H04W 64/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
- **KOLLAR, Martin
  04018 Kosice (SK)**
- **TATARCZYK, Krzysztof
  54-129 Wroclaw (PL)**

(74) Representative: **Novagraaf Technologies
Bâtiment O2
2, rue Sarah Bernhardt
CS90017
92665 Asnières-sur-Seine Cedex (FR)**

(54) **APPARATUS AND METHOD FOR PROVIDING MIMO LAYER COVERAGE**

(57)    A method carried out by an apparatus (101) comprising a processor (202) is described. The method comprises, for a given number of MIMO layers, said number of MIMO layers being equal or greater than one, determining (404, 504) a greatest distance among respective distances between a base station (101) and at least one user equipment device (103 - 105) to which said given number of layers is assigned in physical resource blocks, said at least one user equipment device being located in a cell (102) provided by said base station. A corresponding apparatus is also described.

**Fig. 3**

EP 4 250 581 A1

**Description**

TECHNICAL FIELD

An apparatus and a method for providing MIMO layer coverage are described. Applications include user equipment layer assignment in a cellular network.

BACKGROUND

5G Macro Cells will use MIMO (multiple input, multiple output) as a technique to send and receive more data simultaneously. MIMO is used in conjunction with spatial multiplexing as a way to increase the peak data rate. MIMO techniques however increase the need for consequent proper capacity monitoring on the operator's side.

SUMMARY

The scope of protection is set out by the independent claims. The embodiments, examples and features, if any, described in this specification that do not fall under the scope of the protection are to be interpreted as useful for understanding the various embodiments or examples that fall under the scope of protection.

One or more exemplary embodiments concern a method carried out by an apparatus comprising a processor, said method comprising, for a given number of MIMO layers, said number of MIMO layers being equal or greater than one, determining a greatest distance among respective distances between a base station and at least one user equipment device to which said given number of layers is assigned in physical resource blocks, said at least one user equipment device being located in a cell provided by said base station.

The information obtained can be used in various ways, including monitoring cell resource usage for MIMO scenarios for uplink and/or downlink.

According to one aspect, said method is performed at least for one among: downlink communication, uplink communication.

According to one aspect, said cell being divided into a plurality of angular sectors, said determining comprises determining a respective greatest distance based on at least one user equipment device located in a respective angular sector.

According to one aspect, said method further comprises, for a given number of MIMO layers, obtaining an average of said respective greatest distances over said plurality of angular sectors.

According to one aspect, said method further comprises repeating said determining for a plurality of MIMO layer numbers.

According to one aspect, said method further comprises, when said method is performed for downlink,

- determining a number of physical resource blocks scheduled on Physical Downlink Shared CHannel, PDSCH, for user equipment devices located at a distance in a range defined by the average greatest distance for a number y-1 of MIMO layers and the average greatest distance for a number y of MIMO layers, y being an integer;
- associating said determined number of physical resource blocks with the cell area in said range.

According to one aspect, said method further comprises, when said method is performed for uplink,

- determining a number of physical resource blocks scheduled on Physical Uplink Shared CHannel, PUSCH, for user equipment devices located at a distance in a range defined by the average greatest distance for a number y-1 of MIMO layers and the average greatest distance for a number y of MIMO layers, y being an integer;
- associating said determined number of physical resource blocks with the cell area in said range.

According to one aspect, said determining is repeated for each number of MIMO layers between one and a maximum number of MIMO layers that can be assigned per user equipment and physical resource block.

According to a variant aspect, said determining is carried out for a subset of layers comprising a plurality of MIMO layers between one and a maximum number of MIMO layers that can be assigned per user equipment and physical resource block.

According to one aspect, said method further comprises

- determining a location of a given user equipment device in said cell;
- determining a range within which the given user equipment is located, said range being defined by the greatest distance for a number y-1 of MIMO layers and the greatest distance for a number y of MIMO layers, y being an integer;
- assigning y MIMO layers per physical resource block to said given device.

According to one aspect, said determining comprises obtaining respective greatest distances for a plurality of respective user equipment sampling periods, only the greatest distance among said respective greatest distances being retained as output of said determining.

One or more embodiments concern an apparatus comprising means for performing, for a given number of MIMO layers, said number of MIMO layers being equal or greater than one, determining a greatest distance among respective distances between a base station and at least one user equipment device to which said given number of layers is assigned in physical resource blocks, said at least one user equipment device being located in a cell provided by said base station.

According to one aspect, said means are further configured to provide said greatest distances least for one among: downlink communication, uplink communication.

According to one aspect, said cell being divided into a plurality of angular sectors, said means are further configured to perform determining comprises determining a respective greatest distance based on at least one user equipment device located in a respective angular sector.

According to one aspect, said means are further configured to perform, for a given number of MIMO layers, obtaining an average of said respective greatest distances over said plurality of angular sectors.

According to one aspect, said means are further configured to perform, repeating said determining for a plurality of MIMO layer numbers.

According to one aspect, when downlink is considered, said means are further configured for:

- determining a number of physical resource blocks scheduled on Physical Downlink Shared CHannel, PDSCH, for user equipment devices located at a distance in a range defined by the average greatest distance for a number y-1 of MIMO layers and the average greatest distance for a number y of MIMO layers, y being an integer;
- associating said determined number of physical resource blocks with the cell area in said range.

According to one aspect, when uplink is considered, said means are further configured for:

- determining a number of physical resource blocks scheduled on Physical Uplink Shared CHannel, PUSCH, for user equipment devices located at a distance in a range defined by the average greatest distance for a number y-1 of MIMO layers and the average greatest distance for a number y of MIMO layers, y being an integer;
- associating said determined number of physical resource blocks with the cell area in said range.

According to one aspect, said means are configured to perform said determining as comprising obtaining respective greatest distances for a plurality of respective user equipment sampling periods, only the greatest distance among said respective greatest distances being retained as output of said determining.

According to one aspect, said means are configured to perform said determining repeatedly for each number of MIMO layers between one and a maximum number of MIMO layers that can be assigned per user equipment and physical resource block.

According to one aspect, said means are configured to perform

- determining a location of a given user equipment device in said cell;
- determining a range within which the given user equipment is located, said range being defined by the greatest distance for a number y-1 of MIMO layers and the greatest distance for a number y of MIMO layers, y being an integer;
- assigning y MIMO layers per physical resource block to said given device.

According to one aspect, the means comprise

at least one processor;
at least one memory including computer program code, the at least one memory and computer program code configured to, with the at least one processor, cause the performance of the apparatus.

One or more exemplary embodiments concern a non-transitory computer-readable medium storing computer-executable code that, when executed by at least one processor at a device, causes the device to perform the steps of the methods according to one or more exemplary embodiments disclosed herein.

BRIEF DESCRIPTION OF THE DRAWINGS

Example embodiments will be more fully understood from the detailed description provided herein and the accompanying drawings, which are given by way of illustration only.

FIG. 1 is a schematic diagram of a cellular communication network according to one or more embodiments;
FIG. 2 is a functional block diagram of a base station according to one or more embodiments;
FIG. 3 is a flowchart of a method according to one or more exemplary embodiments;
FIG. 4 is flowchart of a method according to one or more exemplary embodiments;
FIG. 5 is a flowchart of a method according to one or more exemplary embodiments;
FIG. 6 is a schematic representation of a cell with plots showing the results of a simulated example based on the method of FIG. 4;
FIG. 7 is a schematic representation of a cell with plots showing the results of a simulated example based on the method of FIG. 5.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment and should not be interpreted as defining or limiting the range of values or properties encompassed by example embodiments. The use of similar or identical reference numbers in the various drawings is intended to indicate the presence of a similar or identical element or feature.

DETAILED DESCRIPTION

Various exemplary embodiments will now be described more fully with reference to the accompanying drawings. However, specific structural and functional details disclosed herein are merely representative for purposes of describing example embodiments. The exemplary embodiments may be embodied in many alternate forms and should not be construed as limited to only the embodiments set forth herein. It should be understood that there is no intent to limit example embodiments to the particular forms disclosed.

It should be appreciated by those skilled in the art that any functions, engines, block diagrams, flow diagrams, state transition diagrams and / or flowcharts herein represent conceptual views of illustrative circuitry embodying the principles of the exemplary embodiments. Similarly, it will be appreciated that any flow charts, flow diagrams, state transition diagrams, pseudo code, and the like represent various processes which may be substantially represented in computer readable medium and so executed by a computer or processing apparatus, whether or not such computer or processor is explicitly shown.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, functional blocks denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

Although a flow chart may describe the operations as a sequential process, many of the operations may be performed in parallel, concurrently or simultaneously. In addition, the order of the operations may be rearranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium", "computer readable storage medium" or "non-transitory computer readable storage medium" may be any physical media that can be read, written or more generally accessed by a computer / a processing device. Examples of computer storage media include, but are not limited to, a flash drive or other flash memory devices (e.g. memory keys, memory sticks, USB key drive), CD-ROM or other optical storage, DVD, magnetic disk storage or other magnetic storage devices, solid state memory, memory chip, RAM, ROM, EEPROM, smart cards, a relational database management system, a traditional database, or any other suitable medium that can be used to carry or store program code in the form of instructions or data structures which can be read by a computer processor. Also, various forms of computer-readable medium may be used to transmit or carry instructions to a computer, including a router, gateway, server, or other transmission device, wired (coaxial cable, fiber, twisted pair, DSL cable) or wireless (infrared, radio, cellular, microwave). The instructions may include code from any computer-programming language, including, but not limited to, assembly, C, C++, Basic, SQL, MySQL, HTML, PHP, Python, Java, Javascript, etc. Embodiments of a computer-readable medium include, but are not limited to, both computer storage media and communication media including any medium that facilitates transfer of a computer program from one place to another. Specifically, program instructions or computer readable program code to perform embodiments described herein may be stored, temporarily or permanently, in whole or in part, on a non-transitory computer readable medium of a local or remote storage device including one or more storage media.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

According to example embodiments, network elements, network devices, data servers, network resource controllers, network apparatuses, clients, routers, gateways, network nodes, computers, cloud-based servers, web servers, application servers, proxies or proxy servers, or the like, may be (or include) hardware, firmware, hardware executing software or any combination thereof. Such hardware may include processing or control circuitry such as, but not limited to, one or more processors, one or more CPUs, one or more integrated circuits one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

As used in this application, the term "circuitry" may refer to one or more or all of the following:

> (a) hardware-only circuit implementations (such as implementations in only analog and/or digital circuitry) and
> (b) combinations of hardware circuits and software, such as (as applicable):

>> (i) a combination of analog and/or digital hardware circuit(s) with software/firmware and
>> (ii) any portions of hardware processor(s) with software (including digital signal processor(s)), software, and memory(ies) that work together to cause an apparatus, such as a mobile phone or server, to perform various functions) and

> (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Exemplary embodiments described herein are placed in the frame of a 5G Next Radio (NR) communication network. However, the Person Skilled in the Art may easily apply the teachings disclosed herein to other types of networks in which mobile user equipment may be used.

A user device is configured to be in a wireless connection on one or more communication channels in a cell with an access node (such as (e/g)NodeB) providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

In what follows, a user equipment ('UE') typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a UE may also be a nearly exclusive uplink only device, of which an example is a camera or video camera loading images or video clips to a network.

The capabilities of 5G wireless access extend far beyond previous generations of mobile communications. 5G wireless access provides wireless connectivity for a wide range of new applications and use cases. This includes industries such as automotive, logistics, public safety, media, and manufacturing. Examples of these capabilities include very high data rates, spectral efficiency and mobility requirements, ultralow latency, ultra-high reliability, and very low device cost and energy consumption. These capabilities are achieved by the development of special techniques.

5G Macro Cells will use MIMO (multiple input, multiple output) as a technique to send and receive more data simultaneously. The benefit to users is that more people can simultaneously connect to the network and maintain high throughput.

MIMO is used in conjunction with spatial multiplexing as a way to increase the peak data rate. This method uses additional transmit and receive antennas to transmit parallel data layers. As a result, the channel capacity is increased without increasing the bandwidth or the SNR. With an MS x MR MIMO constellation - where MS is the number of transmit antennas and MR is the number of receive antennas - the maximum number of spatially separate data layers is defined as M = min{MS, MR}. This means that a 2 x 2 MIMO system can spatially multiplex a maximum of two data layers (i.e. independent data streams). Practically, it means that the same physical resources or Physical Resource blocks (PRBs) are used to transmit two independent data layers at the same time in uplink (UL) or downlink (DL) direction for the related User Equipment (UE).

The MIMO technique may not be applicable in each case. For example, under certain circumstances (such as identically polarized radio waves), spatial multiplexing does not bring any benefit with respect to capacity, while it is of much more benefit in extreme cases of multipath propagation (such as indoor reception). The applicability of MIMO also depends on the radio channel conditions. The MIMO channel state information (CSI) which is reported by UE to Base station (BS) can be used to determine whether spatial multiplexing is practicable.

MIMO can be divided into SU-MIMO (Single User MIMO) and MU-MIMO (Multi User MIMO) categories. The main difference between SU-MIMO and MU-MIMO is that SU-MIMO allows only one UE to simultaneously send or receive multiple data layers from a BS, while MU-MIMO allows multiple UEs to simultaneously send or receive the multiple data layers.

Inventing the MIMO techniques however increased the need for consequent proper capacity monitoring from the operators' side. The physical radio resource utilization measurements could provide operators the load information of the radio network during the measurement time period. The measurements can make the operator aware of whether a cell has ever experienced high load or not in the monitoring period, and is a key input to network capacity planning and load balancing. In the non-MIMO case when one layer is assigned to one PRB, the most used indicator for resource monitoring on the physical layer is the simple PRB Utilization Ratio, respectively in the DL and the UL direction, defined as the ratio of the used and available PRBs, respectively for DL and UL traffic transmission. The ratios for DL and UL are described respectively in chapter 5.1.1.2.1 and chapter 5.1.1.2.2 of 3GPP TS 28.552 for 5G.

In case of MIMO as described above, the channel capacity is increased without increasing the bandwidth and thus the legacy techniques of pure PRB Utilization Ratio cannot be applied.

Two temporary solutions have been proposed:

1. "PDSCH Time-domain average Maximum Scheduled Layer Number of cell for MIMO scenario", chapter 5.1.1.30.3 in the 3GPP TS 28.552, "PUSCH Time-domain average Maximum Scheduled Layer Number of cell for MIMO scenario", chapter 5.1.1.30.4 in the 3GPP TS 28.552.

2. "Average value of scheduled MIMO layers per PRB on the DL", chapter 5.1.1.30.5 in the 3GPP TS 28.552,

"Average value of scheduled MIMO layers per PRB on the DL", chapter 5.1.1.30.6 in the 3GPP TS 28.552.

The first approach aims at estimating the average number of available layers per PRB as the average of samples over the measurement period, where each sample represents the maximum number of layers used per PRB in the sampling interval in DL and UL direction, respectively. Samples are samples in the time domain.

Monitoring is done e.g. over a measurement period which is divided into the samples. For example, a measurement period of five minutes, i.e. 300 000 ms, may be divided into 3000 sampling intervals, each one lasting 100 ms. In case radio conditions change rapidly based on UE location in the observed area, the number of available layers may be significantly overestimated, which in turn may lead to underestimated values in the resource utilization ratio. Thus operators may wrongly receive information about still available capacity in MIMO while in reality, there is no such capacity available.

To detail this further, for example in the case of UEs being grouped in an area far away from the base station (BS) and in bad radio conditions, the average number of available layers per PRB obtained with this method may be unachievable for this group of UEs. Practically, this means that the resource utilization can never reach 100 %.

The second approach aims at estimating the average number of available layers per PRB as the sum of used resources from all samples over the observed period duration (which is significantly higher than the measurement period used for the resource utilization measurement), where each sample is obtained as the sum of all used PRBs in the sampling interval, each one multiplied with the respective number of layers used, for all the UEs , divided by the total number of used PRBs. In case radio conditions change rapidly based on UE location in the observed area, the number of available layers may significantly differ from the true value. Especially when monitoring is performed during measurement periods in which UEs are located only in some sectors where the number of available layers per PRB may significantly differ (i.e. within a given sector, some PRBs may have a high number of available layers and some a low number'), a wrong impression about available capacity being sufficient or insufficient may be obtained.

Last but not least, a common drawback of both approaches is that the number of available layers per PRB is obtained from all UEs, i.e. also the ones that may be in the geographical area of the cell allowing a high number of possible layers, with these layers however remaining unused due to limitations in UE capabilities allowing the use of only a lesser number of layers. This may lead to non-negligible distortion in the measured MIMO resource utilization.

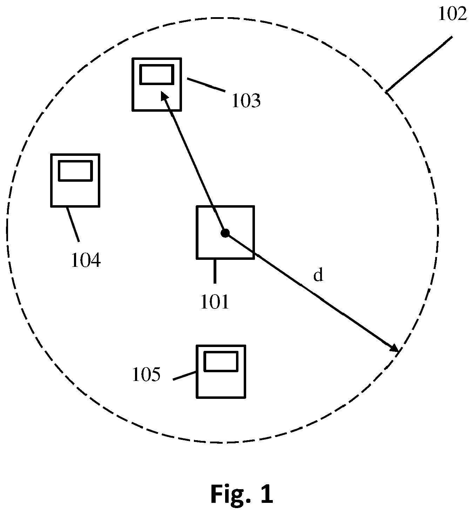

FIG. 1 is a block diagram of cellular network according to one or more non-limiting exemplary embodiments. While in what follows, a 5G cellular network is taken as an example, the principles described herein can be applied to other types of networks. The network comprises a base station 101 generating a cell 102. For clarity, the cell has a simple circular shape with size or radius d. Several devices 103 to 105 are located within the coverage area of cell 102. These devices are typically UEs, but the principles described herein are not limited to UEs. Base station assigns a respective number of layers to each of the devices 103 to 105 per PRB, and respectively for uplink communication and downlink communication. The number of layers assigned to one UE for a PRB can evolve dynamically, e.g. by the base station in response to a UE channel quality report.

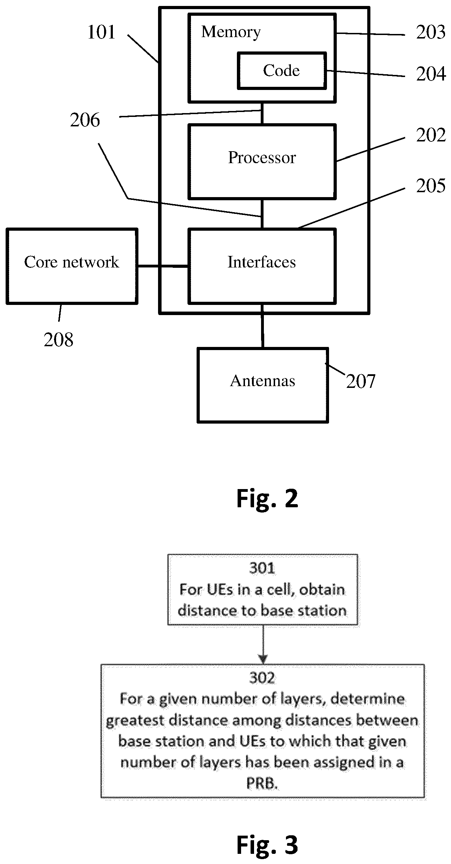

FIG. 2 is a functional block diagram of base station 101. Base station 101 comprises a processor 202, a storage medium such as a ROM 203 holding software code 204, communication interfaces 205 for communicating, on one hand through antennas 207 with devices 103 to 105 connecting to the cell generated by the base station, and on the other hand with cellular network equipment 208. Code 204, when executed by the processor 202, causes the base station to perform one or more of the methods described herein. An internal bus 206 of base station 101 connects the different blocks.

FIG. 3 is a flowchart of a process according to one or more example embodiments. For a given number of layers, information indicative of the distance - or radius - between the base station or cell center and the most remote UE having been assigned this given number of layers is determined (301). The maximum distance is then retained (302) for the given layer number. This information can be obtained for all numbers of layers. The maximum distance can be obtained disregarding the angular position of UEs or be obtained for sub-angles - or angular sectors - of identical or distinct values of angles, to determine a more precise cell coverage map in terms of layers.

The process of FIG. 3 enables obtention of information which defines sub-cell areas within a cell based on the observation of devices, such as UEs, within that cell. Each area is associated with a maximum number of layers and the limits of an area correspond to the greatest distance(s) at which UE(s) with that number of layers have been detected.

The resulting cell map can be used for one or more of the following, this list not being exhaustive: assign a maximum possible number of layers to a given UE (e.g. a new UE or a UE for which an adaptation of the number of assigned layers is otherwise desirable) as a function of the position of the UE within the cell, evaluate assigned resources for part of all of the UEs in the cell, evaluate used/unused resources among assigned resources.

In what follows, N designates the maximum number of layers configurable for a given PRB and a UE.

According to a first embodiment, the cell angle (360°) is divided into a number of sub-angle bins with the total number of sub-angle bins being equal to M and the sum of the sub-angles totaling 360°. According to the present embodiment, each sub-angle bin width is in the range of one or a few degrees, for example 10 degrees.

A measurement period is defined. The definition of such a period can be done in various ways and its duration and periodicity depend on the context. In the present embodiment, purely as a non-limiting example, a measurement period of a periodicity of five minutes and a duration of 100 ms is defined - several thousand sampling periods fit into this measurement period.

During a sampling period, each sub-angle is considered in turn. The active UEs belonging to this sub-angle bin are taken into consideration. A UE is assigned to a given sub-angle bin based for example on the reported or estimated Angle of Arrival ('AoA'). AoA is discussed for example in chapter 8.14.1 of 3GPP TS 38.305. The distance between an active UE and the base station is determined. The distance can for example be evaluated based on a Timing Advance value ('TA'). TA is discussed for example in chapter 5.2.4 of 3GPP TS 36.214. The TA is reported by the base station of a UE, and for that UE, the last reported value is used. For each number of layers 1...N or, according to a variant, for a subset of these layers, the maximum distance to an active UE with y assigned layers per PRB is determined and stored. For example, if a sub-angle bin contains three UEs with four layers per PRB, the greatest among the distances between the three UEs and the base station is retained for y equal to four. A map is obtained which for each sub-angle and each number of layers 1 to N provides a maximum distance.

The same process is repeated in a subsequent sampling period, and if for the given number of layers there is a UE which is at a greater distance from the base station than the distance previously stored for the same sub-angle, the maximum distance is updated. The process is repeated for all sampling periods in the measurement period.

Note that the order of the different processing steps may be varied as necessary by the person skilled in the art to achieve the same result. E.g. all data concerning all sampling periods may first be obtained and maximum distances be obtained afterwards, UEs may be sorted by number of layers per PRB, and then processing is done by sub-angle for each number of layers etc...

In what follows, 'diy' designated the maximum distance between a UE and the base station for i ranging from 1 to M and identifying the sub-angle bin, and y ranging from 1 to N and denoting the number of assigned layers per PRB and UE. The output of the above process can be written as a matrix D= [MxN]. According to the present embodiment, in case that, for a given sub-angle and a given number of layers, no corresponding UE is found over the whole measurement period, the related value of diy is set to zero.

According to a second embodiment, the output of the method according to the first embodiment is simplified by obtaining average maximum distance values over all sub-angles for each number y of layers. If written in matrix format, a matrix D' = [1xN] could be used, where d'1y represents the average distance - or radius - within the cell up to which a UE with the assigned number y layers can be localized. It is calculated from matrix D as follows:

$$d'_{1y} = \frac{\sum_{i=1}^{M} d_{iy}}{M} \quad (1)$$

Although in the above process, all sub-angles have a same value, this is not necessarily so - according to a variant embodiment, different sub-angle values may be used for different angular sectors. In particular, sub-angle values can be configured individually.

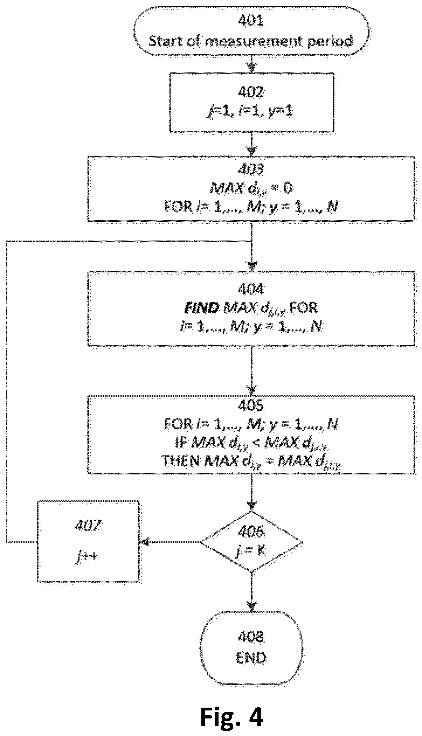

FIG. 4 is a flowchart of a possible implementation of the first embodiment. A measurement period starts at 401. At 402, counters j, i, and y are initialized to the value 1. j is an integer indexing the current sampling period, with j <K, i is an integer indexing a sub-angle bin or angular sector under consideration, with i <= M, and y is an integer equal to the number of layers under consideration, with y<=N. At 403, maximum distances between UEs and the base station per layer and sub-angle bin, $MAX\ d_{i,y}$ whatever the sampling period (i.e. 'all-time' maxima over all sampling periods of a given measurement period), are set to zero. At 404, the maximum distances $MAX\ d_{j,i,y}$ per sub-angle bin and per layer are determined for sampling period j. At 405, the obtained maximum distances are compared, for same layer number and sub-angle bin, with the respective maximum distances covering all sampling periods, the latter being individually updated if UEs with greater distances have been determined in the current sampling period. If all sampling periods were considered (406), the process stops at 408, else j is increased (407) and the next sampling period is processed. At the end of the process, MxN maximum distance values - which can also be referred to as 'measurement results' - have been obtained, which allows obtaining a detailed available layers coverage map for a cell. Considering that j sampling periods are taken into account, a total of jxMxN measurements are performed.

According to a second embodiment, a single distance value is provided for a given number of layers for a cell. This is achieved by determining, for each number of layers under consideration, an average of the maximum distances over all sub-angles M. This corresponds to the calculation defined by equation (1).. While the precision of the obtained data may be lower than that of the first embodiment with regard to specific directions, the number of values is drastically reduced - the process according to the second embodiment outputs only N values. This precision may be sufficient for most uses.

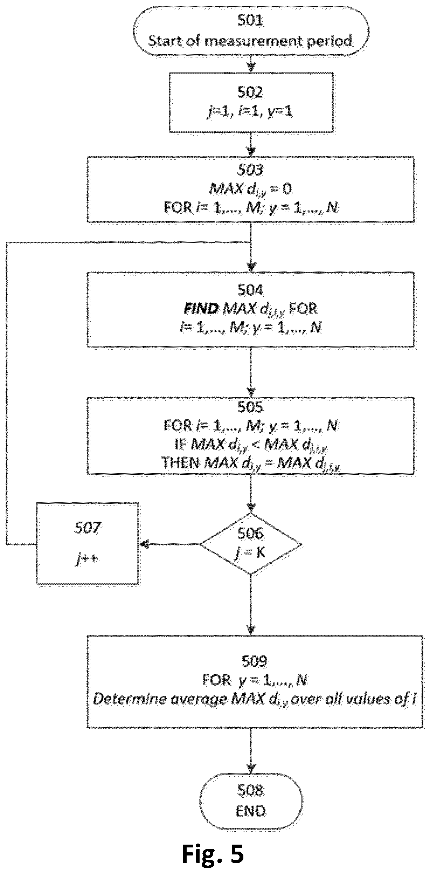

FIG. 5 is a flowchart that illustrates one possible implementation of the second embodiment. Steps 501 to 508 of FIG. 5 are similar to steps 401 to 408 of FIG. 4. In a step 509 inserted between steps 506 and 508, the maximum distances retained as output from steps 501 to 507 are averaged, for each number of layers, over all sub-angles, as per equation (1).

At the end of the process, N maximum distance value averages have been obtained.

The processes according to the embodiments described above can typically be carried out by base station 101 or part thereof, such as a distribution unit. They can however be carried out by any individual device or combination of devices that can obtain the data necessary for carrying out the process, whether in a raw format or already partially processed in some manner.

Any of the above embodiments can be applied to uplink and/or downlink transmissions. Measurements for uplink or downlink are preferably performed separately.

The information obtained as an output of the above embodiments can be used in various ways. For example, according to a non-limiting exemplary embodiment, the operator will get exact information about the areas with respective number of possible layers. As such operator may apply network planning and optimization rules to adapt the maximum possible number of layers assigned to a UE based on its location. This may be done for a new UE, or for UEs already present. For a new UE, the base station may assign a number of layers corresponding to the location of the new UE - if the UE is located between the maximum distances determined for x and x+1 layers, then x+1 layers may be assigned by the base station.

According to a variant of the above embodiments, since x+1 defines the maximum number of layers assignable based on known observations, a lower number of layers may also be assigned.

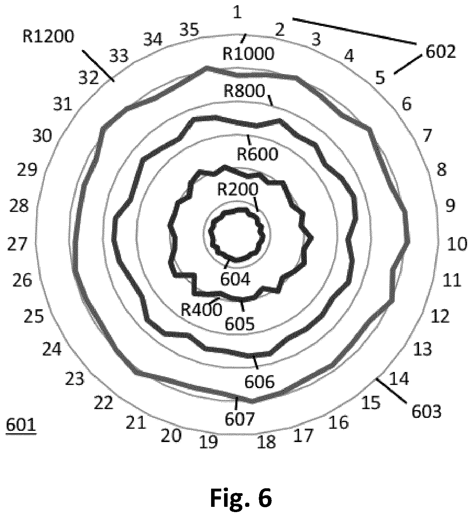

FIG. 6 is a graph showing the simulated results of the first embodiment applied to a non-limiting example case. The cell 601 shown in the example has 36 sub-angle bins with regular 10° increments (indexes are referenced 602), a radius of 1000m - circles 603 show distances labelled 'Rx' where x is the distance from the cell center, with 200m increments. The number of layers was set to four. Plots 604 to 607 respectively represent the maximum distances per sub-angle bin for four to one layers. The four plots represent respectively the maximum distances at which a UE with respectively 4, 3, 2 and 1 layers per PRB may be placed within the cell. The plots represent 36x4 measurement values per sampling period.

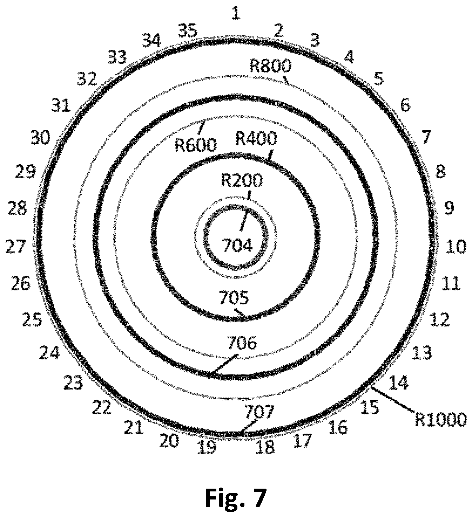

FIG. 7 is a graph showing the simulated results of the second embodiment applied to a non-limiting example case, with generally the same setup as that of FIG. 6, with the exception that only four measurements are made per sampling period. The results are four concentric circles, respectively 704 to 707, at approx. 150m, 400m, 700m and 980m corresponding respectively to the maximum distances for 4, 3, 2 and 1 layers.

According to one or more embodiments, based on the information available as output from the above embodiments, the amount of available resources for MIMO is calculated.

According to one or more embodiments, the amount of available resources for MIMO is determined by applying the following function:

$$\sum_y y * PDSCHPRBsLayer.BINy \quad (2)$$

For a given UE in the cell:

- The number of PRBs scheduled for the given UE is obtained. This number may for example be the number of PRBs scheduled on the Physical Downlink Shared Channel, PDSCH.

- A number of layers for this given UE is determined, based on the previously obtained coverage map. This number is for example the maximum number of layers assignable in view of the location of the UE. If the UE is located between the maximum distances determined for x and x+1 layers, then x+1 layers are used.

- A summation of the values obtained for all UEs in the cell is then performed, over the measurement period interval.

The resulting sum gives the amount of resources available within the cell, whether actually used by the UEs or not. Using this approach, the operator can monitor resource utilization for MIMO in relation to available layers in the given area of the cell to the resources actually used by the UEs. Actual usage of resources by the UEs is known to the base station.

A typical example is when some of the UEs are not MIMO capable for the number of layers that are available at their location. This is indicative of available capacity. The amount of available resources for MIMO is calculated accordingly to how given areas within the cell are occupied by the UEs and thus provides the true value on available resources. Such an evaluation may be performed globally for a cell and/or more precisely at the level of areas as defined by the coverage map.

A similar process can be applied for uplink.

According to one or more embodiments, total amount of available resources for MIMO is determined using the function below, which extends the approach of the previous embodiment taking into consideration the case when all available PRBs are used:

$$\left( \frac{\sum_y y * PDSCHPRBsLayer.BINy}{(DL\ Total\ PRB\ Usage/100)} \right) (3)$$

This function divides the value obtained from the first approach by the 'DL Total PRB Usage'. This latter measurement term is defined in chapter 5.1.2.1 in 3GPP TS 28.552 - it is the ratio of used physical resource blocks on the downlink on the total number of PRBs on the downlink over an observation period of duration T. The factor 1/100 is used when 'DL Total PRB Usage' is defined as a percentage and can be omitted if 'DL Total PRB Usage' is defined as a simple ratio between 0 and 1.

A similar process can be applied for uplink.

As an example, consider a cell with ten UEs, observed over a period of five minutes (300 000 ms), during which 150 000 slots of a duration of 1ms each were scheduled for these UEs. Assuming all available PRBs in the slots were scheduled for and used by these ten UEs, and that the number of layers per UE was two, applying function (2) yields: 2*10*150 000 = 3 000 000. 'DL Total PRB Usage'/100 is equal to 150 000 / 300 000 = 0.5. Applying function (3) yields: 3 000 000 / 0.5 = 6 000 000. This indicates that 3 000 000 slots, half of the total number of resources assigned to the UEs, are still unused.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

## Examples

AUS1 - Apparatus comprising

at least one processor; and
at least one memory including computer program code;
the at least one memory and the computer program code configured to, with the at least one processor, cause the apparatus to at least perform:
for a given number of MIMO layers, said number of MIMO layers being equal or greater than one, determining a greatest distance among respective distances between a base station and at least one user equipment device to which said given number of layers is assigned in physical resource blocks, said at least one user equipment device being located in a cell provided by said base station.

AUS2 - Apparatus according to clause AUS1, the at least one memory and the computer program code being configured, with the at least one processor, to cause the apparatus to provide said greatest distances least for one among: downlink communication, uplink communication.

AUS3 - Apparatus according to clause AUS2, the at least one memory and the computer program code being configured, with the at least one processor, to cause the apparatus to perform:
said cell being divided into a plurality of angular sectors, said determining, wherein said determining comprises determining a respective greatest distance based on at least one user equipment device located in a respective angular sector.

AUS4 - Apparatus according to clause AUS3, the at least one memory and the computer program code being configured, with the at least one processor, to cause the apparatus to perform, for a given number of MIMO layers, obtaining an average of said respective greatest distances over said plurality of angular sectors.

AUS5 - Apparatus according to one of clauses AUS1 to AUS4, the at least one memory and the computer program code being configured, with the at least one processor, to cause the apparatus to perform repeating said determining for a plurality of MIMO layer numbers. AUS6 - Apparatus according to clause AUS5, the at least one memory and the computer program code being configured, with the at least one processor, to cause the apparatus to perform, for downlink,

- determining a number of physical resource blocks scheduled on Physical Downlink Shared CHannel, PDSCH, for user equipment devices located at a distance in a range defined by the average greatest distance for a number y-1 of MIMO layers and the average greatest distance for a number y of MIMO layers, y being an integer;
- associating said determined number of physical resource blocks with the cell area in said range.

AUS7 - Apparatus according to clause AUS5, the at least one memory and the computer program code being configured, with the at least one processor, to cause the apparatus to perform, for uplink,

- determining a number of physical resource blocks scheduled on Physical Uplink Shared CHannel, PUSCH, for user equipment devices located at a distance in a range defined by the average greatest distance for a number y-1 of MIMO layers and the average greatest distance for a number y of MIMO layers, y being an integer;
- associating said determined number of physical resource blocks with the cell area in said range.

AUS8 - Apparatus according to one of the clauses AUS5 to AUS7, the at least one memory and the computer program code being configured, with the at least one processor, to cause the apparatus to perform said determining as comprising obtaining respective greatest distances for a plurality of respective user equipment sampling periods, only the greatest distance among said respective greatest distances being retained as output of said determining.

AUS9 - Apparatus according to one of the clauses AUS5 to AUS8, the at least one memory and the computer program code being configured, with the at least one processor, to cause the apparatus to perform said determining repeatedly for each number of MIMO layers between one and a maximum number of MIMO layers that can be assigned per user equipment and physical resource block.

AUS10 - Apparatus according to one of the clauses AUS1 to AUS9, the at least one memory and the computer program code being configured, with the at least one processor, to cause the apparatus to perform

- determining a location of a given user equipment device in said cell;
- determining a range within which the given user equipment is located, said range being defined by the greatest distance for a number y-1 of MIMO layers and the greatest distance for a number y of MIMO layers, y being an integer;
- assigning y MIMO layers per physical resource block to said given device.

SAEP1 - An apparatus comprising means for performing a measurement providing a sub-cell radius within an observed cell up to where a user equipment with a given number of MIMO layers in downlink, DL, per physical resource block, PRB, can be localized, said measurement being obtained by computing the sub-cell radius d'1y within the observed cell up to where a user equipment with the given number of MIMO layers y in DL per PRB can be localized, wherein

$$d'_{1y} = \frac{\sum_{i=1}^{M} d_{iy}}{M}$$

where $d_{iy}$ denotes maximum distance of a user equipment from base station with the assigned MIMO layers number y per PRB in DL from all samples within the measurement period within the i-th AoA interval and where M denotes the number of AoA (sub-angle) intervals.

SAEP2 - An apparatus comprising means for performing a measurement providing a sub-cell radius within an observed cell up to where a user equipment with a given number of MIMO layers in uplink, UL, per physical resource block, PRB, can be localized, said measurement being obtained by computing the sub-cell radius d'1y within the observed cell up to where a user equipment with the given number of MIMO layers y in UL per PRB can be localized, wherein

$$d'_{1y} = \frac{\sum_{i=1}^{M} d_{iy}}{M}$$

where $d_{iy}$ denotes maximum distance of a user equipment from base station with the assigned MIMO layers number y per PRB in UL from all samples within the measurement period within the i-th AoA interval and where M denotes the number of AoA (sub-angle) intervals.

SAEP3 - An apparatus comprising means for performing a measurement providing Distribution of Scheduled Physical Downlink Shared Channel, PDSCH, physical resource blocks, PRBs, based on MIMO Layers Coverage Map per user equipment, UE, and per PRB on the downlink, DL, said measurement being obtained by pegging the respective bin y with the number of PRBs scheduled on PDSCH for the UE on the distance from the base station within the range of the bin y (MIMOLayersDL(y-1), MIMOLayersDLy>.

SAEP4 - An apparatus comprising means for performing a measurement providing Distribution of Scheduled Physical Uplink Shared Channel, PUSCH, physical resource blocks, PRBs, based on MIMO Layers Coverage Map per user equipment, UE, and per PRB on the uplink, UL, said measurement being obtained by pegging the respective bin y with the number of PRBs scheduled on PUSCH for the UE on the distance from the base station within the range of the bin y (MIMOLayersUL(y-1), MIMOLayersULy>.

SAEP5 - The apparatus according to one of the clauses SAEP1 to SAEP4, wherein the means comprise

at least one processor;
at least one memory including computer program code, the at least one memory and computer program code configured to, with the at least one processor, cause the performance of the apparatus.

SMEP1 - A method performing a measurement providing a sub-cell radius within an observed cell up to where a user equipment with a given number of MIMO layers in downlink, DL, per physical resource block, PRB, can be localized, said measurement being obtained by computing the sub-cell radius d'1y within the observed cell up to where a user equipment with the given number of MIMO layers y in DL per PRB can be localized, wherein

$$d'_{1y} = \frac{\sum_{i=1}^{M} d_{iy}}{M}$$

where $d_{iy}$ denotes maximum distance of a user equipment from base station with the assigned MIMO layers number y per PRB in DL from all samples within the measurement period within the i-th AoA interval and where M denotes the number of AoA (sub-angle) intervals.

SMEP2 - A method performing a measurement providing a sub-cell radius within an observed cell up to where a user equipment with a given number of MIMO layers in uplink, UL, per physical resource block, PRB, can be localized, said measurement being obtained by computing the sub-cell radius d'1y within the observed cell up to where a user equipment with the given number of MIMO layers y in UL per PRB can be localized, wherein

$$d'_{1y} = \frac{\sum_{i=1}^{M} d_{iy}}{M}$$

where $d_{iy}$ denotes maximum distance of a user equipment from base station with the assigned MIMO layers number y per PRB in UL from all samples within the measurement period within the i-th AoA interval and where M denotes the number of AoA (sub-angle) intervals.

SMEP3 - A method performing a measurement providing Distribution of Scheduled Physical Downlink Shared Channel, PDSCH, physical resource blocks, PRBs, based on MIMO Layers Coverage Map per user equipment, UE, and per PRB on the downlink, DL, said measurement being obtained by pegging the respective bin y with the number of PRBs scheduled on PDSCH for the UE on the distance from the base station within the range of the bin y (MIMOLayersDL(y-1), MIMOLayersDLy>.

SMEP4 - A method performing a measurement providing Distribution of Scheduled Physical Uplink Shared Channel, PUSCH, physical resource blocks, PRBs, based on MIMO Layers Coverage Map per user equipment, UE, and per PRB on the uplink, UL, said measurement being obtained by pegging the respective bin y with the number of PRBs scheduled on PUSCH for the UE on the distance from the base station within the range of the bin y (MIMOLayersUL(y-1), MIMOLayersULy>.

SAUS 1 - An apparatus comprising

at least one processor; and
at least one memory including computer program code;
the at least one memory and the computer program code configured to, with the at least one processor, cause the apparatus to perform:
a measurement providing a sub-cell radius within an observed cell up to where a user equipment with a given number of MIMO layers in downlink, DL, per physical resource block, PRB, can be localized, said measurement being obtained by computing the sub-cell radius d'1y within the observed cell up to where a user equipment with the given number of MIMO layers y in DL per PRB can be localized, wherein

$$d'_{1y} = \frac{\sum_{i=1}^{M} d_{iy}}{M}$$

where $d_{iy}$ denotes maximum distance of a user equipment from base station with the assigned MIMO layers number y per PRB in DL from all samples within the measurement period within the i-th AoA interval and where M denotes the number of AoA (sub-angle) intervals.

SAUS2 - An apparatus comprising

at least one processor; and
at least one memory including computer program code;
the at least one memory and the computer program code configured to, with the at least one processor, cause the apparatus to perform:
a measurement providing a sub-cell radius within an observed cell up to where a user equipment with a given number of MIMO layers in uplink, UL, per physical resource block, PRB, can be localized, said measurement being obtained by computing the sub-cell radius d'1y within the observed cell up to where a user equipment with the given number of MIMO layers y in UL per PRB can be localized, wherein

$$d'_{1y} = \frac{\sum_{i=1}^{M} d_{iy}}{M}$$

where $d_{iy}$ denotes maximum distance of a user equipment from base station with the assigned MIMO layers number y per PRB in UL from all samples within the measurement period within the i-th AoA interval and where M denotes the number of AoA (sub-angle) intervals.

SAUS3 - An apparatus comprising

at least one processor; and
at least one memory including computer program code;
the at least one memory and the computer program code configured to, with the at least one processor, cause the apparatus to perform:
a measurement providing Distribution of Scheduled Physical Downlink Shared Channel, PDSCH, physical resource blocks, PRBs, based on MIMO Layers Coverage Map per user equipment, UE, and per PRB on the downlink, DL, said measurement being obtained by pegging the respective bin y with the number of PRBs scheduled on PDSCH for the UE on the distance from the base station within the range of the bin y (MIMOLayersDL(y-1), MIMOLayersDLy>.

SAUS4 - An apparatus comprising

at least one processor; and
at least one memory including computer program code;
the at least one memory and the computer program code configured to, with the at least one processor, cause the apparatus to perform:
a measurement providing Distribution of Scheduled Physical Uplink Shared Channel, PUSCH, physical resource blocks, PRBs, based on MIMO Layers Coverage Map per user equipment, UE, and per PRB on the uplink, UL, said measurement being obtained by pegging the respective bin y with the number of PRBs scheduled on PUSCH for the UE on the distance from the base station within the range of the bin y (MIMOLayersUL(y-1), MIMOLayersULy>.

Annex

In this Annex, the definition of the measurements is based on the template with the meaning of the subclauses (a, b, c, d, e, f, g, h and i) as defined by chapter 3.3 in 3GPP TS 32.404.

5.1.1.30.x Available MIMO Layers Coverage Map per UE and per PRB on the DL

a) This measurement provides the sub-cell radius within the observed cell up to where a UE with the given number of MIMO layers in DL per PRB can be localized.
b) SI.
c) This measurement is obtained by computing the sub-cell radius $d'_{1y}$ within the observed cell up to where a UE with the given number of MIMO layers y in DL per PRB can be localized using the following formula:

$$d'_{1y} = \frac{\sum_{i=1}^{M} d_{iy}}{M}$$

where $d_{iy}$ denotes maximum distance of a UE from base station with the assigned MIMO layers number y per PRB in DL from all samples within the measurement period within the i-th AoA interval. The M denotes the number of AoA (sub-angle) intervals. The width of the AoA (sub-angle) intervals can be constant which may be obtained as total cell angle 360° divided by M or can be separately configured by operator. The UE distance from base station and angle of arrival are based on the last reported TA and AoA values. The measurement is provided for SU MIMO, MU MIMO and also for the number of layers equal to 1 which may be specific case with non MIMO applied.
d) Each measurement is a real value in meters [m].
e) The measurement name has the form MIMOLayersDLy where y ranges from 1 to maximum possible MIMO layers that can be assigned per UE and PRB in DL
f) NRCellDU.
g) Valid for packet switched traffic.
h) 5GS.
i) One usage of this measurement is to monitor the cell capacity for MIMO scenario on the DL.

5.1.1.30.y Available MIMO Layers Coverage Map per UE and per PRB on the UL

a) This measurement provides the sub-cell radius within the observed cell up to where an UE with the given number of MIMO layers in UL per PRB can be localized.

b) SI.
c) This measurement is obtained by computing the sub-cell radius $d'_{1y}$ within the observed cell up to where an UE with the given number of MIMO layers y in UL per PRB can be localized using the following formula:

$$d'_{1y} = \frac{\sum_{i=1}^{M} d_{iy}}{M}$$

where $d_{iy}$ denotes maximum sample of distance of an UE from base station with the assigned MIMO layers number y per PRB in UL from all samples within the measurement period within the i-th AoA interval. The M denotes the number of AoA (sub-angle) intervals. The width of the AoA (sub-angle) intervals can be constant which may be obtained as total cell angle 360° divided by M or can be separately configured by operator. The UE distance from base station and angle of arrival are based on the last reported TA and AoA values. The measurement is provided for SU MIMO, MU MIMO and also for the number of layers equal to 1 which may be specific case with non MIMO applied.
d) Each measurement is a real value in meters [m].
e) The measurement name has the form MIMOLayersULy where y ranges from 1 to maximum possible MIMO layers that can be assigned per UE and PRB in UL
f) NRCellDU.
g) Valid for packet switched traffic.
h) 5GS.
i) One usage of this measurement is to monitor the cell capacity for MIMO scenario on the UL.

**5.1.1.30.z** Distribution of Scheduled PDSCH PRBs based on MIMO Layers Coverage Map in DL

a) This measurement provides Distribution of Scheduled PDSCH PRBs based on MIMO Layers Coverage Map per UE and per PRB on the DL.

b) SI.

c) This measurement is obtained by pegging the respective bin y with the number of PRBs scheduled on PDSCH for the UE on the distance from the base station within the range of the bin *y* (MIMOLayersDL(y-1), MIMOLayersDLy>.

d) Each measurement is a real value.

e) The measurement name has the form PDSCHPRBsLayer.BINy where y represents the number of layers that can be assigned per PRB on PDSCH to the UE on the distance from base station within the following interval: (MIMOLayersDL(y-1), MIMOLayersDLy>, where MIMOLayersDLy represents measurement defined in the chapter 5.1.1.30.x above / in the 3GPP TS 28.552.

f) NRCellDU.

g) Valid for packet switched traffic.

h) 5GS.

i) One usage of this measurement is to monitor the cell resource usage for MIMO scenario on the DL.

**5.1.1.30.v** Distribution of Scheduled PUSCH PRBs based on MIMO Layers Coverage Map in UL

a) This measurement provides Distribution of Scheduled PUSCH PRBs based on MIMO Layers Coverage Map per UE and per PRB on the UL.

b) SI.

c) This measurement is obtained by pegging the respective bin y with the number of PRBs scheduled on PUSCH for the UE on the distance from the base station within the range of the bin *y* (MIMOLayersUL(y-1), MIMOLayersULy>.

d) Each measurement is a real value.

e) The measurement name has the form PUSCHPRBsLayer.BINy where y represents the number of layers that can be assigned per PRB on PUSCH to the UE on the distance from base station within the following interval: (MIMOLayersUL(y-1), MIMOLayersULy>, where MIMOLayersULy represents measurement defined in the chapter 5.1.1.30.y above / in the 3GPP TS 28.552.

f) NRCellDU.

g) Valid for packet switched traffic.

h) 5GS.

i) One usage of this measurement is to monitor the cell resource usage for MIMO scenario on the UL.

A.x Monitoring of Available MIMO Layers Coverage Map per UE and per PRB

The Available MIMO Layers Coverage Map per UE and per PRB should be monitored, as it reflects possible improvement brought by MIMO with the increased number of layers in the 5G business network. The operators can use this information to monitor what may be the limitations from the number of assigned layers per UE and PRB in the observed cell based on UE distance from the base station. Besides, filling up the bins of the Available MIMO Layers Coverage Map with the number of scheduled PRBs of the UE on distance from the base station falling into the given bin may provide the information that can be used to optimize the MIMO equipment performance and other OAM works.

**Claims**

1. A method carried out by an apparatus (101) comprising a processor (202), said method comprising:

   - for a given number of MIMO layers, said number of MIMO layers being equal or greater than one, determining (404, 504) a greatest distance among respective distances between a base station (101) and at least one user equipment device (103 - 105) to which said given number of layers is assigned in physical resource blocks, said at least one user equipment device being located in a cell (102) provided by said base station.

2. The method according to claim 1, wherein said method is performed at least for one among: downlink communication, uplink communication.

3. The method according to claim 2, wherein, said cell being divided into a plurality of angular sectors (602), said determining comprises determining a respective greatest distance based on at least one user equipment device located in a respective angular sector.

4. The method according to claim 3, further comprising, for a given number of MIMO layers, obtaining (509) an average of said respective greatest distances over said plurality of angular sectors.

5. The method according to one of the claims 1 to 4, comprising repeating said determining for a plurality of MIMO layer numbers.

6. The method according to claim 5, further comprising, when said method is performed for downlink,

   o determining a number of physical resource blocks scheduled on Physical Downlink Shared CHannel, PDSCH, for user equipment devices located at a distance in a range defined by the average greatest distance for a number y-1 of MIMO layers and the average greatest distance for a number y of MIMO layers, y being an integer;
o associating said determined number of physical resource blocks with the cell area in said range.

7. The method according to claim 5, further comprising, when said method is performed for uplink,

o determining a number of physical resource blocks scheduled on Physical Uplink Shared CHannel, PUSCH, for user equipment devices located at a distance in a range defined by the average greatest distance for a number y-1 of MIMO layers and the average greatest distance for a number y of MIMO layers, y being an integer;
o associating said determined number of physical resource blocks with the cell area in said range.

8. The method according to one of the claims 5 to 7, said determining being repeated for each number of MIMO layers between one and a maximum number of MIMO layers that can be assigned per user equipment and physical resource block.

9. The method according to one of the claims 5 to 8, further comprising

o determining a location of a given user equipment device in said cell;
o determining a range within which the given user equipment is located, said range being defined by the greatest distance for a number y-1 of MIMO layers and the greatest distance for a number y of MIMO layers, y being an integer;
o assigning y MIMO layers per physical resource block to said given device.

10. The method according to one of claims 1 to 9, wherein said determining comprises obtaining (403 - 407) respective greatest distances for a plurality of respective user equipment sampling periods, only the greatest distance among said respective greatest distances being retained as output of said determining.

11. Apparatus comprising means for performing:

- for a given number of MIMO layers, said number of MIMO layers being equal or greater than one, determining (504) a greatest distance among respective distances between a base station (101) and at least one user equipment device to which said given number of layers is assigned in physical resource blocks, said at least one user equipment device being located in a cell provided by said base station.

12. The apparatus according to claim 11, said means being further configured to provide said greatest distances least for one among: downlink communication, uplink communication.

13. The apparatus according to claim 12 wherein, said cell being divided into a plurality of angular sectors (602), said means being further configured to perform determining comprises determining a respective greatest distance based on at least one user equipment device located in a respective angular sector.

14. The apparatus according to claim 13, said means being further configured to perform, for a given number of MIMO layers, obtaining (509) an average of said respective greatest distances over said plurality of angular sectors.

15. The apparatus according to one of the claims 11 to 14, said means being further configured to perform, repeating said determining for a plurality of MIMO layer numbers.

16. The apparatus according to claim 15, said means being further configured to perform, for downlink,

o determining a number of physical resource blocks scheduled on Physical Downlink Shared CHannel, PDSCH, for user equipment devices located at a distance in a range defined by the average greatest distance for a number y-1 of MIMO layers and the average greatest distance for a number y of MIMO layers, y being an integer;
o associating said determined number of physical resource blocks with the cell area in said range.

17. The apparatus according to claims 15, further comprising, for uplink,

o determining a number of physical resource blocks scheduled on Physical Uplink Shared CHannel, PUSCH, for user equipment devices located at a distance in a range defined by the average greatest distance for a number y-1 of MIMO layers and the average greatest distance for a number y of MIMO layers, y being an integer;
o associating said determined number of physical resource blocks with the cell area in said range.

18. The apparatus according to one of claims 15 to 17, said means being further configured to perform said determining as comprising obtaining respective greatest distances for a plurality of respective user equipment sampling periods, only the greatest distance among said respective greatest distances being retained as output of said determining.

19. The apparatus according to one of the claims 15 to 18, said means being further configured to perform said determining repeatedly for each number of MIMO layers between one and a maximum number of MIMO layers that can be assigned per user equipment and physical resource block.

20. The apparatus according to one of the claims 11 to 19, said means being further configured to perform

   o determining a location of a given user equipment device in said cell;
   o determining a range within which the given user equipment is located, said range being defined by the greatest distance for a number y-1 of MIMO layers and the greatest distance for a number y of MIMO layers, y being an integer;
   o assigning y MIMO layers per physical resource block to said given device.

21. The apparatus according to one of the claims 11 to 20, wherein the means comprise

   at least one processor (202);
   at least one memory (203) including computer program code (204), the at least one memory and computer program code configured to, with the at least one processor, cause the performance of the apparatus.

**Fig. 1**

101

Memory — 203

Code — 204

206

Processor — 202

— 205

Core network — Interfaces

208

Antennas — 207

## Fig. 2

301
For UEs in a cell, obtain distance to base station

302
For a given number of layers, determine greatest distance among distances between base station and UEs to which that given number of layers has been assigned in a PRB.

## Fig. 3

```
         ╭──────────────────────────────╮
         │            401               │
         │  Start of measurement period │
         ╰──────────────┬───────────────╯
                        ▼
         ┌──────────────────────────────┐
         │            402               │
         │       j=1, i=1, y=1          │
         └──────────────┬───────────────┘
                        ▼
     ┌──────────────────────────────────────┐
     │                403                   │
     │          MAX d_{i,y} = 0             │
     │   FOR i= 1,..., M; y = 1,..., N      │
     └──────────────────┬───────────────────┘
                        ▼
     ┌──────────────────────────────────────┐
     │                404                   │
     │       FIND MAX d_{j,i,y} FOR         │
     │      i= 1,..., M; y = 1,..., N       │
     └──────────────────┬───────────────────┘
                        ▼
     ┌──────────────────────────────────────┐
     │                405                   │
     │   FOR i= 1,..., M; y = 1,..., N      │
     │     IF MAX d_{i,y} < MAX d_{j,i,y}   │
     │   THEN MAX d_{i,y} = MAX d_{j,i,y}   │
     └──────────────────┬───────────────────┘
                        ▼
  ┌────────┐        ╱────────╲
  │  407   │◄──────┤   406    │
  │        │        ╲  j = K  ╱
  │  j++   │         ╲────────╱
  └────────┘             │
                         ▼
              ╭────────────────╮
              │      408       │
              │      END       │
              ╰────────────────╯
```

$$MAX\ d_{i,y} = 0$$

$$FIND\ MAX\ d_{j,i,y}$$

$$IF\ MAX\ d_{i,y} < MAX\ d_{j,i,y}$$

$$THEN\ MAX\ d_{i,y} = MAX\ d_{j,i,y}$$

# Fig. 4

```
                    ╭─────────────────────────╮
                    │          501            │
                    │ Start of measurement    │
                    │        period           │
                    ╰─────────────────────────╯
                                │
                    ┌─────────────────────────┐
                    │          502            │
                    │    j=1, i=1, y=1        │
                    └─────────────────────────┘
                                │
                    ┌─────────────────────────┐
                    │          503            │
                    │    MAX d_{i,y} = 0      │
                    │ FOR i= 1,..., M; y = 1,..., N │
                    └─────────────────────────┘
                                │
                    ┌─────────────────────────┐
                    │          504            │
                    │   FIND MAX d_{j,i,y} FOR │
                    │  i= 1,..., M; y = 1,..., N │
                    └─────────────────────────┘
                                │
                    ┌─────────────────────────┐
                    │          505            │
                    │ FOR i= 1,..., M; y = 1,..., N │
                    │   IF MAX d_{i,y} < MAX d_{j,i,y} │
                    │ THEN MAX d_{i,y} = MAX d_{j,i,y} │
                    └─────────────────────────┘
                                │
    ┌──────────┐           ◇─────────◇
    │   507    │ ◄─────────   506
    │   j++    │           │  j = K
    └──────────┘           ◇─────────◇
                                │
                    ┌─────────────────────────┐
                    │          509            │
                    │     FOR y = 1,..., N     │
                    │ Determine average MAX d_{i,y} over all values of i │
                    └─────────────────────────┘
                                │
                    ╭─────────────────────────╮
                    │          508            │
                    │          END            │
                    ╰─────────────────────────╯
```

# Fig. 5

**Fig. 6**

**Fig. 7**

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 10 958 317 B1 (MARUPADUGA SREEKAR [US] ET AL) 23 March 2021 (2021-03-23)<br>* column 2, line 21 - column 3, line 10 *<br>* column 9, line 5 - column 10, line 59; figure 3 * | 1-3, 11-13,21<br>4-10, 14-20 | INV.<br>H04B7/0413<br>H04B7/0452<br>H04L5/00<br>H04W72/04<br>H04W64/00<br>H04B7/0456 |
| X<br>A | US 11 038 639 B1 (SONG MINHO [US] ET AL) 15 June 2021 (2021-06-15)<br>* column 1, line 25 - line 57 *<br>* column 4, line 23 - column 5, line 10; figure 1 *<br>* column 11, line 10 - line 54; figure 6 * | 1-3, 11-13,21<br>4-10, 14-20 | |
| A | US 2021/058890 A1 (AKKARAKARAN SONY [US] ET AL) 25 February 2021 (2021-02-25)<br>* paragraph [0066] - paragraph [0087]; figure 1 *<br>* paragraph [0120] - paragraph [0124]; figure 8 * | 1-21 | |
| A | US 2021/242913 A1 (MANOLAKOS ALEXANDROS [US] ET AL) 5 August 2021 (2021-08-05)<br>* paragraph [0088]; figure 6 *<br>* paragraph [0093] - paragraph [0100]; figure 8 *<br>* paragraph [0104] - paragraph [0111]; figure 9 * | 1-21 | **TECHNICAL FIELDS SEARCHED (IPC)**<br><br>H04B<br>H04W<br>H04L |

-/--

The present search report has been drawn up for all claims

| Place of search | Date of completion of the search | Examiner |
|---|---|---|
| Munich | 16 September 2022 | Cabañas Prieto, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 16 4182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CMCC ET AL: "Discussion on Introduction of average value of scheduled MIMO layers per PRB", 3GPP DRAFT; S5-215338, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG5, no. e-meeting; 20211011 – 20211020 1 October 2021 (2021-10-01), XP052065615, Retrieved from the Internet: URL:https://ftp.3gpp.org/tsg_sa/WG5_TM/TSGS5_139e/Docs/S5-215338.zip S5-215338 Discussion on Introduction of average value of scheduled MIMO layers per PRB.doc [retrieved on 2021-10-01] * the whole document * | 1-21 | |

-----

|   |   |
|---|---|
| | **TECHNICAL FIELDS SEARCHED (IPC)** |

The present search report has been drawn up for all claims

| Place of search | Date of completion of the search | Examiner |
|---|---|---|
| Munich | 16 September 2022 | Cabañas Prieto, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 4182

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2022

| Patent document cited in search report | | | Publication date | Patent family member(s) | | | Publication date |
|---|---|---|---|---|---|---|---|
| US 10958317 | B1 | | 23-03-2021 | NONE | | | |
| US 11038639 | B1 | | 15-06-2021 | NONE | | | |
| US 2021058890 | A1 | | 25-02-2021 | BR | 112022001995 | A2 | 29-03-2022 |
| | | | | CN | 114258657 | A | 29-03-2022 |
| | | | | EP | 4018738 | A1 | 29-06-2022 |
| | | | | KR | 20220050890 | A | 25-04-2022 |
| | | | | TW | 202127938 | A | 16-07-2021 |
| | | | | US | 2021058890 | A1 | 25-02-2021 |
| | | | | WO | 2021041291 | A1 | 04-03-2021 |
| US 2021242913 | A1 | | 05-08-2021 | CN | 114982141 | A | 30-08-2022 |
| | | | | TW | 202130201 | A | 01-08-2021 |
| | | | | US | 2021242913 | A1 | 05-08-2021 |
| | | | | WO | 2021154406 | A1 | 05-08-2021 |

EPO FORM P0459

For more details about this annex : see Official Journal of the European Patent Office, No. 12/82